# EUROPÄISCHE PATENTSCHRIFT

(11) **EP 1 584 149 B1**
(45) Veröffentlichungstag und Bekanntmachung des Hinweises auf die Patenterteilung: **27.05.2020**
(21) Anmeldenummer: 04702678.6
(22) Anmeldetag: 16.01.2004
(51) Int. Cl.: H04H 20/67, H04B 7/26

(54) **VERFAHREN ZUR GLEICHWELLENÜBERTRAGUNG UND GLEICHWELLENÜBERTRAGUNGSSYSTEM HIERZU**
COMMON-FREQUENCY TRANSMISSION METHOD AND COMMON-FREQUENCY TRANSMISSION SYSTEM THEREFOR
PROCEDE DE TRANSMISSION SUR ONDE COMMUNE ET SYSTEME DE TRANSMISSION SUR ONDE COMMUNE ASSOCIE

(30) Priorität: 16.01.2003 DE 10301556
(43) Veröffentlichungstag der Anmeldung: 12.10.2005
(73) Patentinhaber: iAd Gesellschaft für Informatik, Automatisierung und Datenverarbeitung mbH, 90613 Grosshabersdorf (DE)
(72) Erfinder: BUMILLER, Gerd, 90768 Fürth/Vach (DE)
(74) Vertreter: Dreykorn-Lindner, Werner
(86) Internationale Anmeldenummer: PCT/EP2004/000302
(87) Internationale Veröffentlichungsnummer: WO 2004/064276

(56) Entgegenhaltungen:
- EP-A- 1 248 412
- DE-A- 3 337 648
- GB-A- 2 260 467
- US-A- 6 028 857
- CHUN-CHUAN YANG ET AL: "A reachability-guaranteed approach for reducing broadcast storms in mobile ad hoc networks", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 2, 24 September 2002 (2002-09-24), pages 1036-1040, XP010608972, DOI: 10.1109/VETECF.2002.1040760 ISBN: 978-0-7803-7467-6

## Beschreibung

Die Erfindung betrifft in erster Linie ein Verfahren zur Gleichwellenübertragung (Oberbegriff des Patentanspruchs 1) und ein Gleichwellenübertragungssystem hierzu (Patentanspruchs 5).

Gleichwellenübertragungssysteme, insbesondere Gleichwellenfunksysteme sind seit langem bekannt. Beispielsweise ist aus der DE 32 13 645 A1 ein Gleichwellenfunknetz mit ortsfesten und mobilen Funkstationen, sowie Relaisstellen, deren Sender und gegebenenfalls Empfänger im Gleichwellenbetrieb zur Funkversorgung eines großflächigen Gebiets arbeiten bekannt. Im einzelnen weist das Funknetz eine hierarchische Struktur mit mehreren Ebenen von ortsfesten Zentralen auf. Von jeder Zentrale einer Ebene führen sternförmig Verbindungen zu mehreren Zentralen der nächsten untergeordneten Ebene. Die Relaisstellen sind durch sternförmige Verbindungen jeweils einer Zentrale der untersten Ebene zugeordnet. Von den Zentralen einer Ebene zu den Zentralen der nächsten untergeordneten Ebene sind die Laufzeiten bzw. der Amplituden- und Phasenfrequenzgang jeweils gleich, so dass sämtliche Relaisstellen des großflächigen Gebiets synchron aussenden. Die Relaisstellen weisen einen Zusatzbaustein, , auf, welcher auf Anfrage einer mobilen Funkstation automatisch eine Betriebskanalzuweisung eines das betreffende Gebiet versorgenden Funknetzes gibt. Um eine sicherere, schnellere und automatische Betriebskanalanfrage und -zuweisung zu erreichen, enthalten die mobilen Funkstationen hierzu einen Baustein zur Aussendung eines digitalen Betriebskanalanfragetelegramms, sowie zur Auswertung, Speicherung und Anzeige mehrerer Betriebskanalzuweisungen. Der mobile Teilnehmer wählt eine der angezeigten Betriebskanalnummern aus, stellt diese am Funkgerät ein und. eröffnet das Gespräch auf dem Betriebskanal.

Um den Aufwand zur Aufrechterhaltung eines synchronen Gleichwellenbetriebes innerhalb jedes Versorgungsgebietes möglichst niedrig zu halten, ist es aus der DE 32 15 292 C2 bekannt, die Region in mehrere Versorgungsgebiete mit jeweils einer Zentrale zu unterteilen und sicher zu stellen, dass innerhalb jedes Versorgungsgebietes die Sender von ihrer Zentrale synchronisiert im synchronen Gleichwellenfunkbetrieb arbeiten. Jede Zentrale weist ein Frequenznormal auf, so dass einander benachbarte Versorgungsgebiete im Verhältnis zueinander im quasisynchronen Gleichwellenbetrieb betreibbar sind. Schließlich ist eine Hauptzentrale vorgesehen, die an die verschiedenen Zentralen Modulationssignale zum weitgehend simultanen und phasenstarren Aussenden durch die Sender übermittelt. Die Laufzeitdifferenzen innerhalb der Region (und auch innerhalb mehrerer Regionen) sind dabei auszugleichen. Eine hochfrequenzmäßige Synchronisation der verschiedenen Zentralen von der Hauptzentrale aus erfolgt dagegen nicht oder höchstens gelegentlich, beispielsweise täglich, denn die Zentralen enthalten als Frequenznormale langfristig hochstabile Oszillatoren, um einen quasisynchronen Gleichwellenfunkbetrieb zu erreichen.

Um zu vermeiden, dass die Auslöschungszonen zwischen benachbarten Gleichwellensendern keine spürbare Unterbrechung des Funkbetriebes ergeben, ist es aus der DE 32 44 256 A1 bekannt, die von den einzelnen Gleichwellensendern, abgestrahlten Sendeleistungen bzw. die Abstrahlcharakteristiken der Antennen ständig zu variieren. Die Variation erfolgt in der Weise, dass sich die Empfangsfeldstärken an beliebigen Orten ständig asynchron verändern. Zur Steuerung der Sendeleistungen dienen vorzugsweise Zufallsgeneratoren, wofür jedem Gleichwellensender ein Generator zugeordnet ist. Es kann auch die Abstrahlrichtungen der Sendeantennen der Gleichwellensender ständig verändert werden (durch Zufallsgenerator oder Steuereinrichtung). Durch die daraus resultierenden Feldstärkeänderungen wird erreicht, dass fast nie zwei Gleichwellensender an einem Empfangsort kontinuierlich mit gleicher Amplitude in Gegenphase empfangen werden.

Die Konzeption von Multiträgersystemen zur digitalen Übertragung von Daten, hat in den letzten Jahren immer mehr an Bedeutung gewonnen. Insbesondere das OFDM-Verfahren (Orthogonal Frequency Division Multiplexing) hat sich als zuverlässiges und kostengünstiges Verfahren erwiesen, welches als Übertragungsverfahren zur Anwendung in dem digitalen Audio-Rundfunkstandard DAB (Digital Audio Broadcasting) und dem digitalen terrestrischen Fernsehrundfunkstandard DTTB (Digital Terrestrial Television Broadcasting) zur Übertragung eines Datenstroms benutzt wird. Bei dem OFDM-Verfahren werden seriell eingegebene Symbolströme in einen vorgegebenen Einheitsblock aufgeteilt. Die aufgeteilten Symbolströme jedes Einheitsblocks werden in N parallele Symbole umgewandelt. Die N parallelen Symbole werden durch Multiplexbildung und Addition zusammengefaßt, indem mehrere Unterträger nach Maßgabe eines inversen schnellen Fourier-Transformationsalgorithmus IFFT (Inverse Fast Fourier Transformation) mit jeweils unterschiedlichen Frequenzen verwendet werden, und die so addierten Daten werden über den Kanal übertragen. Dadurch wird erreicht, daß N parallele Symbole als ein Einheitsblock definiert sind, und jeder Unterträger des Einheitsblocks weist eine Orthogonalität (sowohl für zeitlich aufeinanderfolgende als auch spektral benachbarte Symbole) bezüglich ISI (Intersymbol-Interferenz) und ACI (Nachbarkanalinterferenz) auf. Verglichen mit einem herkömmlichen Einzelträger-Übertragungsverfahren kann das OFDM-Verfahren eine durch Mehrwege-Schwund (multi-path fading) in einem Empfangssignal verursachte Zwischensymbolstörung bzw. -Interferenz ISI (Inter-Symbol Interference) vermindern, indem es dieselbe Symbolübertragungsrate aufrechterhält und die Symbolperiode um die Anzahl an Unterkanälen (N) erhöht. Insbesondere wird beim OFDM-Verfahren ein Schutzintervall (Guard-Interväl) zwischen die übertragenen Symbole eingefügt.

Um Interferenzen in Gleichwellennetzen für digitalen Hörfunk, digitales Fernsehen und/oder Datendienste zu reduzieren, ist aus der DE 196 44 430 C1 ein Verfahren bekannt, bei dem ein Funksignal mit identischem Nutzinhalt in die einzelnen Haupt-Richtungen zu verschiedenen Zeiten abgestrahlt wird. Das Verfahren beruht auf der Überlegung, je nach Länge des Schutzintervalls, der Sendernetzgeometrie, der Topographie, der richtungsabhängigen Strahlungsleistungen der Sender und deren Reichweiten, die an einem beliebigen Empfangspunkt auftretenden Laufzeitunterschiede von Signalen unterschiedlicher Sender des Gleichwellennetzes zu optimieren. Dies ist möglich durch Veränderung der Abstrahlungszeit in alle Abstrahlungsrichtungen bzw. Sektoren.

Um alle Organisationsfunktionen durch völlig dezentrale Verfahren zu automatisieren, ist aus der DE 33 37 648 A1 ein Funknetz mit einer Vielzahl von Mobilstationen bekannt, welche je gleichzeitig einen oder mehrere eigene Endteilnehmer nach dem synchronen Zeitmultiplex-Verfahren codegespreizt über digital übertragende, verbindungsorientiert geschaltete transparente Funkkanäle mit Endteilnehmern anderer Mobilstationen verbinden können, wobei jede Station als Vermittlung (Relais) zwischen paarweise kommunizierenden Mobilstationen fungieren kann. Im einzelnen ist vorgesehen, dass die Organisation aller Kommunikations- und Verwaltungsfunktionen durch die Mobilstationen völlig dezentral vorgenommen wird, wobei jede Mobilstation selbständig alle erforderlichen Daten über den Netzzustand, die Konnektivität der Mobilstationen und die möglichen Routen zu allen übrigen Mobilstationen, die Adressen der Teilnehmer, die Verfügbarkeit und Betriebszustände der einzelnen Verbindungen, usw. verwaltet, bei Bedarf aktiv ermittelt und auf Anfrage an andere Mobilstationen weitergibt, sowie bei Bedarf eines eigenen Endteilnehmers oder einer Nachbarstation eine Verbindung zur nächsten in Zielrichtung der Verbindung liegenden Nachbarstation nach dem kanalvermittelten Prinzip schaltet. Hierbei nimmt jede neu aufzunehmende Mobilstation selbständig Kontakt zu Mobilstationen des Netzes auf und nutzt die dort erfragte Information zur gezielten Kontaktaufnahme mit allen übrigen Mobilstationen des Netzes, um sich selbst als Mobilstation des Netzes zu etablieren, wobei bereits kontaktierte Mobilstationen gegebenenfalls als Relais genutzt werden. Vorzugsweise beschafft sich jede Mobilstation mindestens zwei alternative Routen zu jeder Mobilstation im Netz durch aktive Anfrage bei Nachbarstationen und wählt durch Optimierung der Wegelängen im Netz die günstigsten Routen selbständig aus. Im einzelnen ist vorgesehen, dass während eines Sende-/Empfangs-Zeitschlitzes eines synchronen Zeitmultiplexsystems die Antennenkeule der Sende/Empfangsantenne mechanisch durch Umschalter oder elektronisch in die Richtung der dann empfangenden/sendenden Mobilstation gesteuert wird, jedoch in jedem anderen beliebigen Zeitschlitz die Antennenkeulen in beliebige andere dann sendende/empfangende Richtungen strahlen bzw. von dort empfangen werden.
Ein ähnlicher Weg wird beim aus der DE 196 08 846 A1 bekannten dezentralen Funkverbindungsverfahren eingeschlagen, welches den Betrieb von mobilen Telekommunikatiorisfunkrelaisnetzen ohne feste Funkinstallationen und ohne ein externes Funknetzmanagement ermöglicht. Dabei ist vorgesehen, dass beim initialen Aufbau des Funknetzes, zur Aufnahme von Funkverbindungen zwischen einem Quellenteilnehmer und einem Zielteilnehmer über sogenannte Übermitteler, zuerst und ausschließlich hierbei der Quellenteilnehmer eine nicht direkt adressierte Funkrufkodesequenz: Z(A1-A9) abgibt, die:
1) die Zielteilnehmerkennung: A1,
2) seine Übermittelerkennung: A2,
3) eine Nummer A3, für den wievielten Funkaufruf zwischen den Endteilnehmern,
4) den Zeitpunkt der Quellenfunkrufkodesendung: A4,
5) eine Repetitionsnummer: A5 für die wievielte Übertragung eines Übermittlers,
6) der Parameter: A6 der angibt, ob ein direkt adressierter Funkruf (positiver Parameter) ein nicht direkt adressierter Funkaufruf (negativer Parameter), oder ein klassifiziert adressierter Funkaufruf (neutraler Parameter) vorliegt,
7) die Quellenteilnehmerkennung: A7,
8) die Sendeleistungsprioritätsnummer: A8,
9) die thematische Prioritätsnummer: A9
beinhaltet. Dieser Funkruf wird von den direkten Nachbarn aufgenommen, gegebenenfalls fehlerbereinigt und dann mit einer jetzt aktualisierten Übermittelerkennung A2 und fortgezählter Übertragungsrepetitionsnummer A5 an deren jeweilige Nachbarn nicht direkt adressiert weitergegeben. Jeder involvierte

Übermitteler speichert dabei die erhaltene und die weitergesandte Funkkodesequenz für eine bestimmte Zeitdauer. Der Funkruf verbreitet sich somit lawinenartig und flächenartig über das gesamte Funkgebiet, wobei jeder Übermitteler jede ankommende Funkrufkodesequenz mit den gespeicherten bisher aufgenommenen Funkrufkodesequenzen vergleicht und diese nicht direkt adressiert nur weiterleitet, sofern:
a) nicht alle Positionen A1, A4, A7 der ankommenden Funkrufkodesequenz mit denen der bereits gespeicherten Sequenzen übereinstimmen,
b) die Repetitionsnummer A5 der Sequenz unter einer bestimmten internen Repetitionsnummer liegt,
c) die Empfangsleistung des Funkrufkodesignals unter einer bestimmten internen Schwelle: P2 liegt,
d) die Zielteilnehmerkennung A1 nicht mit der eigenen Übermittelerkennung A2 übereinstimmt, bei gleichzeitig negativem Parameter A6,
e) die Weiterleitung eines nicht direkt adressierten Funkrufes nicht innerhalb der internen Totzeit t3 des Übermittlers ansteht und
f) das Funkrufkodesignal fehlerfrei ist bzw. fehlerbefreit werden kann.
Ein nicht direkt adressiert angesprochener Übermitteler ist der Zielteilnehmer, wenn seine eigene Übermittelerkennung mit der Zielkennung des Funkrufkodes übereinstimmt. Die empfangene Funkrufkodesequenz ist dann die Zielsequenz Z (mit A1 = A2, A7). Der Zielteilnehmer kann nun seine Kontaktbereitschaft anzeigen und den eigentlichen Funkpfad bzw. den ersten Rücklauf aufschalten bzw. einleiten. Dazu erzeugt er einen direkt adressierten Funkaufruf mit der neuen Funkkodesequenz Z' an seinem vorangegangenen Übermitteler aus dem nicht direkt adressierten initierenden Funkhinlauf bzw. Vermittelungslauf. Die aktuelle Zielübermittelerkennung A1' ist dann die Übermittelerkennung A2 aus den aufgenommenen und gespeicherten Funkkodesequenzen mit dem aktuellen Verwaltungszeichen A7, mit dem höchstem Parameter A3 (max. A3) und mit negativem Adressierungsparameter A6. Nach einer gewissen Betriebszeit können die Speichermöglichkeiten der einzelnen Funknetzteilnehmer genutzt werden, um eine gezielte, nicht lawinenartige Vermittelung zwischen Quellenteilnehmern, Zielübertragern und Zielteilnehmern durchzuführen. Die Übermitteler übernehmen dann gezielte Vermittelungsdienste, wobei, wenn die Funkkodesequenz beim eigentlichen Zielteilnehmer angekommen ist, diese automatisch als erneute Trägersequenz wieder in Rückwärtsrichtung in den Funkpfad geschickt wird, da der Parameter A3 = A3+1 vom Zielteilnehmer um 1 erhöht wurde und dadurch die Zielübermitteler automatisch wieder in Rückwärtsrichtung ausgewählt werden. So entsteht der aufgeschaltete Funkpfad zum ursprünglichen Quellenteilnehmer. Die notwendige Aktualisierung der Speicher für die direkt adressierten oder klassifiziert adressierten Funkrufe kann entweder durch zeitlich regelmäßig erzeugte Funkaufrufe geschehen, indem jeder Endteilnehmer den erhaltenen Funkaufruf genauso wie die Übermitteler automatisch in den Funkpfad zurückgibt, oder indem dieser den Funkaufruf erst weitergibt, wenn bei diesem ein weiterzugebendes Informationspaket (z.B. Gesprächsinformation, Dateninformation) aufgelaufen bzw. abgeschlossen wurde. Die erste Möglichkeit erhält einen aufgeschalteten Funkpfad permanent aufrecht, erhöht aber das Funkaufkommen.

Ein in besonderer Weise ausgestaltetes System zur digitalen Informationsübertragung mit einem Mehrträgerübertragungsverfahren ist aus der DE 196 38 654 A1 der Anmelderin bekannt. Dieses System weist eine Einrichtung zur Erzeugung eines Sendesignals mit einem Modul zur Trägermodulation auf, dem kanalcodierte parallele Codesymbole eines Eingangssignals zugeführt sind und in dem die Subträger mit den Codesymbolen mittels differentieller Codierung in Frequenzrichtung belegt werden. Dem Modul zur Trägermodulation sind ein Fehlercodierungs- und/oder Verschachtelungsmodul vorgeschaltet und ein Parallel/Seriell-Umsetzer nachgeschaltet. Schließlich sind sendeseitig Mittel zur Erzeugung einer Synchronisierinformation nach Maßgabe einer Präambel für jeden erzeugten Block der Codesymbole und ein Glied zur Erzeugung einer Sendepause zwischen aufeinanderfolgenden Blöcken, d.h. unabhängigen Datenpaketen, vorgesehen.

Um aufwendige Verfahren zur Trägerphasen- und Abtastphasensynchronisation zu umgehen, erfolgt in der DE 196 38 654 A1 der Anmelderin als wesentlicher Grundgedanke die Zuordnung der binären Codesymbole auf die Subträger durch eine differentielle Codierung in Richtung der Subträger, also in Frequenzrichtung; beim Stand der Technik erfolgt dies dagegen durch differentielle Modulation in Zeitrichtung. Bei der DE 196 38 654 A1 kann auf eine Kanalschätzung verzichtet werden, so dass die Übertragung der einzelnen Pakete unabhängig voneinander erfolgt. Zusammen mit einer Kanalcodierung und einer Codesymbolverwürfelung entlang der Träger kann weiterhin auf eine Trägerphasensynchronisation gänzlich verzichtet werden und die zulässigen Toleranzen der Abtastphasensynchronisation sind hoch.

Bei drahtgebundenen oder drahtlosen Punkt-zu-Mehrpunkt- Übertragungsverfahren, wie beispielsweise passiven optischen Netzen, Koaxialkabelnetzen, Automatisierungssystemen oder Funksystemen mit Rückkanal, Satellitenverbindungen kommunizieren mehrere Teilnehmer mit einer Zentrale. So ist aus der DE 196 43 970 A1 ein Verfahren für die Signalübertragung in einem Netz für Punkt-zu-Mehrpunkt-Verbindungen, bei dem der Zugriff der einzelnen Stationen auf ein Übertragungsmedium durch ein TDM/TDMA-Verfahren erfolgt. Hierzu werden in Richtung Punkt-Zu-Mehrpunkt von einer Kopfstation TDM-Signale und in umgekehrter Richtung von einzelnen Mehrpunkt-Stationen burstartig Signale ausgesendet, die an einem oder mehreren Splittern zu einem TDMA-Signal für die Kopfstation zusammengefügt werden. Diese allgemein als Bursts bezeichneten Blöcke von Nutzdaten sind nicht exakt zueinander synchron und treffen im Empfänger nach unterschiedlicher Laufzeit mit unterschiedlicher Signalamplitude/Taktphase ein. Jedem Datenburst sind Guard- und Run-In-Bits vorangestellt, wobei die Guard-Bits das Überlagern zweier Datenbursts verhindern und die Run-In-Bits zu Synchronisation im Empfänger dienen. Da die Entfernung zwischen der Zentrale und der Teilnehmerstation unbekannt ist, muß jede Teilnehmerstation bei Inbetriebnahme eingemessen werden, wozu in einem Einmessfenster des zur Verfügung stehenden Datenübertragungsrahmens Einmessdaten (Datenbursts mit synchronen oder asynchronen Daten) gesendet werden. Im einzelnen werden die burstartigen Signale der Mehrpunkt-Stationen, von einem Splitter zu einem Rahmen zusammengefasst, der in einem Teil für synchrone Daten und in einem anderen Teil für wahlweise asynchrone Nutzdaten oder Einmessdaten vorgesehen ist.

Um bei blockweiser Übertragung von Daten in der Teilnehmereinrichtung auch das Empfangen und Auswerten von zeitlich , versetzten und überlagerten Rahmensynchronisationen zu ermöglichen, ist aus der DE 199 14 324 C1 der Anmelderin ein Kommunikationssystem zur Datenübertragung in einem vermaschten Netzwerk unter Verwendung eines Verfahrens mit Multiträgerübertragung bekannt, bei dem die Signalübertragung in Richtung Punkt-zu-Mehrpunkt durch TDM-Signale und in Richtung Mehrpunkt-zu-Punkt durch Burst-Signale erfolgt. Im einzelnen ist mindestens eine Netzverzweigungs- und/oder Zwischenverstärkereinrichtung im Netzwerk vorgesehen, welche eine mit einer Blocksynchronisations- und Bursterkennungseinrichtung verbundene Steuereinrichtung aufweist, die Bursts zu einem TDMA-Signal zusammenfasst und danach gleichzeitig im gleichen Frequenzbereich auf dem gleichen Medium wieder sendet. Bei diesem Kommunikationssystem werden auf einfache Art und Weise diese Daten überlagert und es entsteht eine Gleichwelle, welche die Zuverlässigkeit der Übertragung erhöht und gleichzeitig gegenüber dem einzelnen Senden der Daten Übertragungszeit spart. Im Vergleich zu bekannten DAB-Systemen werden bei diesem Kommunikationssystem die Bursts auf dem gleichen Medium gesendet, auf dem diese auch empfangen wurden. Durch die Kombination von OFDM/TDM-Verfahren wird eine höhere Bandeffizienz und eine Verringerung der Zwischensymbolinterferenz, bei gleichzeitig optimiertem Schutzintervall und eine noch weiter verbesserte Synchronisation erreicht. Im Vergleich zu TDM-Verfahren ist es nicht erforderlich, in der Zentrale Laufzeitberechnungen durchzuführen und eine Korrektur zum Ausgleich von Laufzeitschwankungen vorzunehmen.

Wie die vorstehende Würdigung des Standes der Technik aufzeigt, sind unterschiedlich ausgestaltete Nachrichtenübertragungssysteme für unterschiedliche Anwendungen bekannt. Ebenso ist das gleichzeitige Senden mehrerer Sender zur Überlagerung der Daten bekannt und wird bei den vorstehend beschriebenen Gleichwellenfunksystemen, insbesondere beim DAB (Digital Audio Broadcasting) als SFN (Single Frequency Network) verwendet. Hierbei handelt es sich um eine andauernde Übertragung, wobei die Sender ihre Daten über verschiedene Übertragungsmedien erhalten und sich synchronisieren. Auf der anderen Seite ist die Datenübertragung mit Hilfe eines OFDM-Verfahrens (Orthogonal **F**requency Division Multiplex) auch in einem Zeitrahmen mit Zeitschlitzen aus der Fachliteratur bekannt (Fachbuch "Nachrichtenübertragung" von Dr. Ing. Karl Dirk Kammermeyer, insbesondere Seite 613 ff).
In der drahtlosen Kommunikation und speziell im Wireless LAN Bereich müssen Sender mit kleinen Sendeleistungen verwendet werden, die den gewünschten Empfänger nicht mehr direkt erreichen. Um dies zu lösen, werden bei vielen Systemen (z.B. GSM, DECT) Basisstationen installiert, bis zu denen der Sender kommen muss, und danach wird die Nachricht zu einer Basisstation geleitet, die der Empfänger hört. Dies bedarf aber einer erheblichen Investition in die Infrastruktur der Basisstationen.

Ein anderer Lösungsansatz liegt dem Kommunikationssystem der DE 199 14 324 C1 I der Anmelderin zugrunde. Dieses Kommunikationssystem zeichnet sich aus, dass jeder Teilnehmer im Netz Nachrichten von einem Teilnehmer zu einem anderen Teilnehmer weiterreichen kann, auch wenn die Daten nicht für einen selber bestimmt sind. Die Nachricht kann somit über eine Kette von Teilnehmern .zu dem gewünschten Empfänger gelangen. Die Teilnehmer, für welche die Nachrichten nicht bestimmt sind, werden Repeater genannt. Da dieses Netzwerk nicht starr ist und gerade bei einer drahtlosen Kommunikation auch mobile Teilnehmer enthalten kann, ist es sehr schwierig immer den richtigen Weg über die Repeater zu finden.

Die Entscheidung für die zu verwendenden Repeater, d.h. für die Route, kann beispielsweise über eine sogenannte Routingtabelle getroffen werden, wie dies beim Funknetz gemäß der DE 33 37 648 A1 beschrieben ist. Bei Netzwerken, in denen sich die Übertragungseigenschaften zwischen den Teilnehmern verändern, insbesondere bei Funknetzen, kann dies ein sehr ineffizientes Try and Error Routing erfordern, wo die Nachrichten zu Repeatern/Mobilstationen geschickt werden, welche die Nachrichten nicht empfangen oder nicht in die richtige Richtung weiter schicken können.

Weiterhin ist aus der GB 2 260 467-A ein Repeater zur Füllung von Versorgungslücken in einem zellularen Funknetz bekannt. Solche Repeater werden häufig zur Erweiterung der Funkversorgung, z. B. in Tunneln, großen Gebäuden oder zur Versorgung von sich im Funkschatten befindlichen Gebieten eingesetzt, und immer dann, wenn die Installation einer Basisstation zu aufwendig ist. Prinzip herkömmlicher Repeater ist - ebenso wie beim Repeater gemäß der GB 2 260 467-A - die bidirektionale Verstärkung der Funksignale in Uplink- und Downlink-Richtung, wobei die Funksignale auf derselben Frequenz wieder ausgesendet werden, auf der sie empfangen wurden. Das Downlink-Signal, also das von der Basisstation des Funknetzes kommende Signal, wird mit einer Anbindungsantenne empfangen, im Repeater verstärkt, möglicherweise gefiltert und über eine Versorgungsantenne zur Mobilstation ausgesendet. Gleichzeitig wird das von der Mobilstation kommende Uplink-Signal mit der Versorgungsantenne empfangen, im Repeater verstärkt, möglicherweise gefiltert und über die Anbindungsantenne zur Basisstation ausgesendet. Die Kopplung der beiden Repeaterzweige an die Antennen erfolgt in der Regel mit Duplex-Filtern. Bei dem bandselektiven Repeater gemäß der GB 2 260 467-A wird ein ganzes Frequenzband mit mehreren Kanälen auf einer Zwischenfrequenz gefiltert und verstärkt. Hierzu ist eine hohe Selektivität der Filterung erforderlich, um Störungen an den Bandgrenzen sowie Rückkopplungen über die beiden Antennen zu vermeiden. Zur Entkopplung des Repeaters gemäß der GB 2 260 467-A sind zwei Antennen erforderlich, die zudem noch voneinander entfernt angeordnet werden müssen und hohe Kosten verursachen. Der Installations- und Wartungsaufwand ist außerdem recht hoch, weil die Feldstärken in der Umgebung des Repeaters sorgfältig ausgemessen und der Repeater aufwendig angepasst werden muss. Bei dem aus der GB 2 260 467-A bekannten System nutzt der Repeater für die Wiederholung zwar evtl. die gleiche Frequenz wie der ursprüngliche Sender, es findet jedoch keine Übertragung mit einer Gleichwelle statt, d.h. mehrere Repeater senden nicht gleichzeitig auf derselben Frequenz das gleiche Signal. Stattdessen fügt jeder Repeater beim Gegenstand der GB 2 260 467-A eine eigene, repeaterspezifische Headerinformationen ein, die zumindest die Repeater-ID oder des Ort enthalten. Hierdurch unterscheiden sich die Wiederholungen verschiedener Repeater voneinander, so dass eine gleichzeitige Aussendung im Sinne der Gleichwelle nicht sinnvoll möglich ist, da sich bei Überlagerung der Signale mehrerer Repeater an einem Empfänger, diese gegenseitig beeinträchtigen bzw. zerstören würden.

Weiterhin ist aus der EP 1 248 412 A2 ein Kommunikationssystem mit einem Kabelnetz bekannt, wobei einerseits über eine Kopfstelle (headend) eine Verbindung ins Internet und anderseits über ein Verbindungsgerät (hub) und ein Antennenarray (antenna node) eine Verbindung zu den jeweils einer bestimmten Zelle zugeordneten Mobilteilnehmern hergestellt werden kann. Somit handelt es sich beim Kommunikationssystem der EP 1 248 412 A2 um ein Netz mit sternförmiger Topologie, bei dem die über die Kopfstelle aus dem Internet ankommenden Datenpakete bzw. Fernsehsignale des Kabelnetzes über das Verbindungsgerät an die jeweils über eine Funkstrecke angeschlossenen Mobilteilnehmer verteilt werden und bei dem für die vermittelte Verbindung und die Übersetzung der verschiedenen Netzwerkprotokolle router erforderlich sind.

Schließlich ist in CHUN-CHUAN YANG et al: "A reachability-guaranteed approach for reducing broadcast storms in mobile ad hoc networks", VTC 2002, Bd. 2, 24. September 2002 (2002-09-24), Seiten 1036-1040) (siehe Ziffer II. SENDER-BASED MECHANISM in Verbindung mit Ziffer III. RECEIVER-BASED MECHANISM), ein Verbindungsaufbau mit einem Relay Set (RS) oder Neighbor Coverage (NC) oder Transmission Order (TO) beschrieben. Wiederum handelt es sich um ein topologiebasiertes Routingverfahren auf Basis von GPS- und Standortinformationen (übertragen in der HELLO Nachricht) in einem vermaschten Funknetz MANET (mobile ad hoc network) zur Vermeidung (Eindämmung) von Broadcast-Storm-Problemen.

In der Regel erfordern die bekannten Systeme aufwendige Einrichtungen zur Synchronisation und zur Festlegung der Route beim Verbindungsaufbau, insbesondere um zu vermeiden, dass während des Betriebs die Synchronität verloren geht und um - bei Störungen - eine Umkonfiguration innerhalb des Netzes zu ermöglichen. Da eine flexible Netzstruktur von großem Nutzen ist und diese einen hohen kostenmäßigen Aufwand erfordert, konnte bisher die Funktionssicherheit von Nachrichtenübertragungssystemen nicht entscheidend verbessert werden. Besonders bedeutsam ist dies, weil sowohl die Telekommunikations-Industrie als auch die Computerindustrie als äußerst fortschrittliche, entwicklungsfreudige Industrien anzusehen sind, die sehr schnell Verbesserungen und Vereinfachungen aufgreifen und in die Tat umsetzen.

Der Erfindung liegt gegenüber den bekannten Verfahren zur Gleichwellenübertragung oder den Gleichwellenfunksystemen die Aufgabe zugrunde, dieses derart auszugestalten, dass auch bei hochdynamischen Veränderungen in den Übertragungswegen ein schnelles und sicheres Übertragen der Nachricht gewährleistet ist.

Diese Aufgabe wird bei einem Verfahren zur Gleichwellenübertragung in einem Gleichwellenübertragungssystem mit mehreren, im Versorgungsgebiet räumlich verteilt angeordneten Sendern, welche eine Steuereinrichtung aufweisen, gemäß Patentanspruch 1 gelöst,
- bei dem von einem das Aussenden von Daten initiierenden Sender die auszusendenden Sendedaten in einem Zeitrahmen, beginnend mit einer Rahmensynchronisation eingefügt, um eine Blockidentifikation ergänzt und das so gebildete Sendesignal vom initiierenden Sender als Broadcast oder Rundmitteilung in alle Richtungen über eine Ankopplungseinheit oder Antenne gesendet wird,
- bei dem in allen zeitlich nachfolgenden, das Sendesignal empfangenden Sendern empfangsseitig die mit einer Blockerkennungseinrichtung verbundene Steuereinrichtung die Blockidentifikation zumindest danach auswertet, ob ein Block bereits empfangen wurde oder nicht, und
- bei dem die Steuereinrichtung, welche mit einer im Sendezweig angeordneten digitalen Signalaufbereitung und einer im Empfangszweig angeordneten Signalaufbereitung in Verbindung steht, eine Synchronisation der Sendesignale steuert, wobei die Zeitachse auf dem Übertragungsweg in mehrere unabhängige, logische Kanäle eingeteilt ist, wobei unterschiedliche Zeitschlitze verschiedenen logischen Kanälen zugeordnet sind und wobei das erneute Senden im nächstfolgenden zeitlich nachfolgenden Zeitschlitz des logischen Kanals erfolgt, in welchem das Sendesignal empfangen wurde, so dass ein quasisynchroner Gleichwellenbetrieb realisiert wird und jeder Sender der einen Block bereits empfangen hat, den Block nicht aussendet.

Das erfindungsgemäße Verfahren zur Gleichwellenübertragung weist den Vorteil auf, dass dieses auch bei sogenannten "ad-hoc Networks" eingesetzt werden kann. Bei Wireless-Netzwerken können sich hochdynamische Veränderungen in den Übertragungswegen ergeben und damit häufige Wechsel der Routing-Wege. Dadurch geht bei herkömmlichen ad-hoc Netzwerken viel Kanalressource verloren für die Ermittlung und ständige Aktualisierung der dafür benötigten Routing-Tabellen. Beim erfindungsgemäßen Verfahren zur Gleichwellenübertragung ist dies nicht der Fall, da hierbei alle Gleichwellensender, die ein Paket empfangen, dieses wiederholen. Demzufolge ist kein Verwaltungsaufwand notwendig, um zu bestimmen, welcher Gleichwellensender/Repeater zu welchem Zeitpunkt ein Paket am besten wiederholen sollte. Die Gleichwellensender/Repeater ergeben sich "automatisch" und werden nicht adressiert, wobei es durchaus möglich ist, dass die nunmehr gesendeten Daten sich von den empfangenen Daten unterscheiden. Weiterhin weist das erfindungsgemäße Verfahren zur Gleichwellenübertragung den Vorteil auf, dass durch die Blockidentifikation quasi eine Adressierungsinformation zur Verfügung steht, nämlich, ob das Telegramm bereits empfangen wurde oder nicht. Teilnehmer, welche ein solches Telegramm erneut "hören", werden nicht aktiv und senden dieses Telegramm nicht mehr aus, so dass geschlossene Schleifen zuverlässig vermieden werden. Dadurch kann ein sogenanntes "saturation network" entstehen. Das "saturation network" benötigt jedoch nicht mehr Zeit oder Kanalressource als bisher ein optimales Routing zum Zielpunkt beim Stand der Technik. Denn das Wiederholen eines Telegramms durch alle Teilnehmer, die es korrekt empfangen, hat zur Konsequenz, dass der optimale Repeater automatisch immer mit dabei ist.

Weiterhin wird diese Aufgabe, gemäß Patentanspruch 5, durch ein Gleichwellenübertragungssystem mit:
- mehreren, im Versorgungsgebiet räumlich verteilt angeordneten Sendern, wobei ein initiierender Sender in der Weise ausgestaltet ist, dass er auszusendende Sendedaten in einem Zeitrahmen, beginnend mit einer Rahmensynchronisation eingefügt, um eine Blockidentifikation ergänzt und das so gebildete Sendesignal als Broadcast oder Rundmitteilung in alle Richtungen über eine Ankopplungseinheit oder Antenne (A) sendet,
- einer in allen Sendern empfangsseitig angeordneten und mit einer Blockerkennungseinrichtung verbundenen Steuereinrichtung,
- einem mit der Steuereinrichtung verbundenen Empfangszweig mit Filter/Verstärker, Analog-Digital-Wandler, digitaler Signalaufbereitung, FFT-Transformator, Demodulator und Decoder/Fehlererkennung,
- einem mit der Steuereinrichtung verbundenen Sendezweig mit Encoder, Modulator, inversen FFT-Transformator, digitaler Signalaufbereitung, Digital-Analog-Wandler und Filter/Verstärker,
- der Antenne oder Ankopplungseinheit des jeweiligen Senders und
- einem mit der Antenne oder Ankopplungseinheit und mit dem Empfangszweig und dem Sendezweig verbundenen Umschalter,
- wobei die Steuereinrichtung in der Weise ausgestaltet ist, zu erkennen, ob ein Block bereits empfangen wurde oder nicht, und in der Weise ausgestaltet ist, die Synchronisation der Sendesignale zu steuern, wobei
die Zeitachse auf dem Übertragungsweg in mehrere unabhängige, logische Kanäle eingeteilt ist, wobei unterschiedliche Zeitschlitze verschiedenen logischen Kanälen zugeordnet sind und wobei die Steuereinrichtung in der Weise ausgestaltet ist, das erneute Senden im nächstfolgenden zeitlich nachfolgenden Zeitschlitz des logischen Kanals zu steuern, in welchem das Sendesignal empfangen wurde, so dass ein quasisynchroner Gleichwellenbetrieb realisiert wird und jeder Sender, in der Weise ausgestaltet ist, dass wenn er einen Block bereits empfangen hat, den Block nicht aussendet, gelöst.

Das erfindungsgemäße Gleichwellenübertragungssystem ist kostengünstig aufzubauen, kann an bestehende Nachrichtenübertragungssysteme angekoppelt/integriert werden, erfordert weder Protokollkonverter noch Speicheraufwand für Netzmanagement bzw. Routing-Tabellen und gewährleistet selbst bei lokalen Netzstörung die Aufrechterhaltung des Netzbetriebs.

In Weiterbildung der Erfindung erfolgt, gemäß Patentanspruch 2, die Signalübertragung zu den zeitlich nachfolgenden Sendern im Zeitmultiplex. Diese Weiterbildung der Erfindung weist den Vorteil auf, dass eine optimale Ausnutzung der Kanalkapazität realisiert werden kann. Das OFDM-Übertragungsverfahren erhält nämlich seine hohe Resistenz gegenüber Mehrwegeausbreitungen durch die massive Parallelübertragung der Daten. Dies führt dazu, dass mit der Auswertung der Daten erst begonnen werden kann, nachdem der komplette Block empfangen ist. Durch die Verarbeitungszeit eines Pakets in den verschiedenen Ebenen (physikalische Schicht und höhere Protokollschichten), kann ein Gleichwellensender/Mobilstation nach Empfang eines Pakets nicht sofort im nächsten Zeitschlitz antworten bzw. dieses wiederholen, sondern es verstreichen ein oder mehrere Zeitschlitze, in denen dies noch nicht möglich ist. Insbesondere durch die Berechnung der FFT und der starken Kanalcodierung entstehen im erfindungsgemäßen Gleichwellenübertragungssystem signifikante Laufzeiten, bis die Daten ausgewertet werden können. Außerdem müssen auch deutlich vor dem Senden die kompletten Daten an das Übertragungssystem übergeben werden, damit diese nach den Berechnungen der Encodierung, Modulation und IFFT rechtzeitig für die Übertragung zur Verfügung stehen. Somit kann die Zeitspanne zwischen dem Empfangen eines OFDM-Symbols und der gesendeten Antwort durchaus bis zu einer Dauer von mehreren OFDM-Symbolen sein. Deshalb wird die Zeitachse auf dem Übertragungsmedium in mehrere unabhängige, logische Kanäle eingeteilt, wobei jedem Kanal unterschiedliche Zeitschlitze zugeordnet sind. Ein Zeitschlitz hat dabei die Größe eines OFDM-Symbols einschließlich der Präambeln und eines Schutzabstandes. Innerhalb eines logischen Kanals soll auf ein empfangenes Paket sofort geantwortet werden. Somit ergibt sich, dass beispielsweise nur jeder 3. Zeitschlitz zu demselben logischen Kanal gehören kann. In den beiden anderen Zeitschlitzen können jetzt ebenfalls logische Kanäle realisiert werden, die gegenseitig unabhängig sind. Die Zuordnung zu den einzelnen logischen Kanälen kann durch unterschiedliche Präambeln oder innerhalb des Protokolls erfolgen. Wenn es von der Organisation günstiger ist, kann auch eine andere Anzahl (z.B. vier oder zwei) an unabhängigen logischen Kanälen aufgebaut werden.

Bei einer bevorzugten Ausgestaltung können, gemäß Patentanspruch 3, die von den zeitlich nachfolgenden Sendern als Wiederholung gesendeten Daten sich von den empfangenen Daten unterscheiden. Vorzugsweise wird dabei, gemäß Patentanspruch 4, vom initiierenden Sender sowie von allen zeitlich nachfolgenden Sendern in den Sendedaten ein Zähler integriert, der vom zeitlich jeweils nachfolgenden Sender vor dessen erneuten Sendung der Daten modifiziert wird und der es erlaubt, die Anzahl der bereits gesendeten Blockwiederholungen und/oder die Anzahl der maximal noch zu sendenden Blockwiederholungen am Empfänger zu ermitteln.

Es ist durchaus möglich, dass bei den Wiederholungen eines Pakets (Blocks) durch die Repeater sich die Daten von den ursprünglich gesendeten Daten unterscheiden. Um die Anzahl der bereits gesendeten Wiederholungen des Pakets festzustellen, kann in vorteilhafter Weise ein Zählvorgang vorgesehen werden. Vorzugsweise ist vorgesehen, einen Zähler im Paket zu integrieren, der beispielsweise bei jeder Wiederholung inkrementiert wird, wodurch die Anzahl der bereits gesendeten Wiederholungen am Empfänger ermittelt werden kann. In ausgedehnten Netzwerken kann durch einen Zähler die Anzahl der Wiederholungen auf eine für diesen Kommunikationswunsch sinnvolle Anzahl begrenzt werden, um das Medium dann wieder freizugeben. Die Steuereinrichtung im Empfänger kann also durch Vergleich mit der vorgebbaren maximalen Anzahl an Wiederholungen entscheiden, ob das Paket erneut gesendet werden soll. Alternativ kann die Steuereinrichtung im Sender beispielsweise den Zähler auch auf die maximal gewünschte Anzahl von Wiederholungen setzen und die Steuereinrichtung im Empfänger dekrementiert diesen und wiederholt das Paket, solange der Zähler nicht bereits auf Null steht. Da sich die als Wiederholung gesendeten Daten von den empfangenen Daten unterscheiden können, muss nur sichergestellt sein, dass die im gleichen Zeitschlitz in einer Gleichwelle gesendeten Daten von allen Sendern identisch sind.

Bei einer bevorzugten Ausgestaltung der Erfindung sind, gemäß Patentanspruch 6, die Sender oder ein Teil der Sender Mobilstationen.

Diese Ausgestaltung der Erfindung weist die Vorteile auf, dass ein flexibles Kommunikationssystem aufgebaut werden kann, bei dem Umkonfigurationen überflüssig sind und ein günstiges Verhältnis zwischen Übertragungskapazität und Übertragungsrate erzielt wird. Durch die rasche Übertragung im Funksystem infolge des quasisynchronen Gleichwellenbetriebs im gesamten Versorgungsgebiet ist der Einfluss der Zugriffszerstörung zu vernachlässigen.

Bei einer bevorzugten Ausgestaltung der Erfindung ist, gemäß Patentanspruch 7, jeder Sender im Gleichwellenübertragungssystem entweder initiierender Sender oder als zeitlich nachfolgender Gleichwellensender ein Repeater.

Um eine sichere Übertragung zu gewährleisten, muss die Anzahl der möglichen Repeater (Relais) maximiert werden. Deshalb wird jeder Teilnehmer im Netzwerk zu einem möglichen Repeater und Gleichwellensender.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
FIG. 1 das Prinzip des erfindungsgemäßen Gleichwellenübertragungsverfahrens und
FIG. 2 eine Ausführungsform eines Repeaters/Gleichwellensenders des Gleichwellenübertragungssystems nach FIG.1.

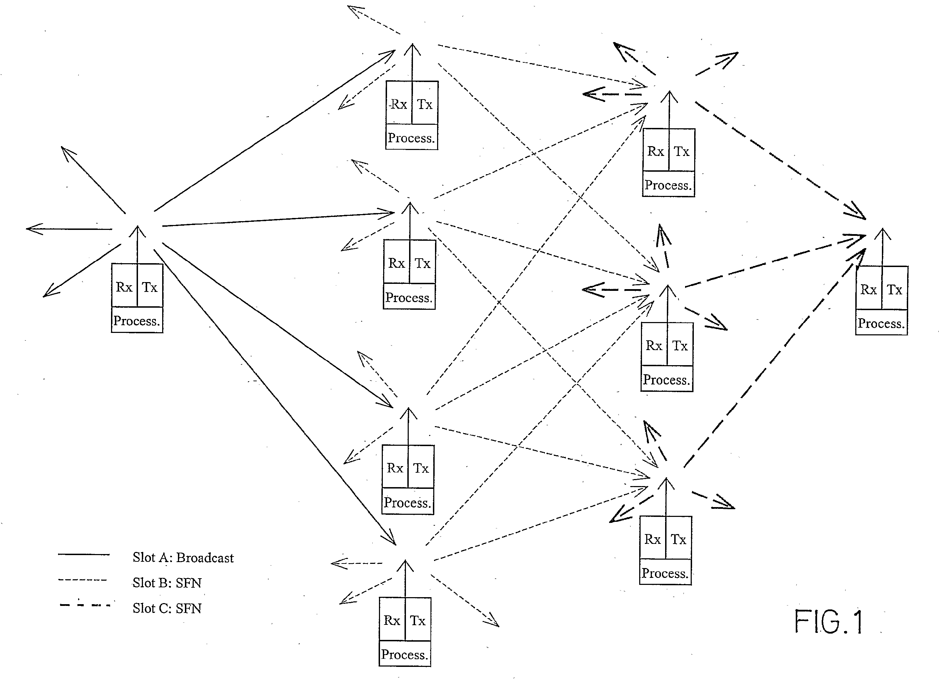

Das in FIG. 1 dargestellte Gleichwellenübertragungssystem, insbesondere ein Gleichwellenfunksystem, weist mehrere, im Übertragungsgebiet, insbesondere Funkgebiet, räumlich verteilt angeordnete Gleichwellensender auf, welche im Zeitmultiplexverfahren betrieben werden. Wenn bei einem Teilnehmer des Gleichwellenfunksystems/ Netzwerkes ein Übertragungswunsch entsteht und er übertragen darf, sendet dieser seine Nachricht mit einer eindeutigen Blockidentifikation als Broadcast/Rundmitteilung in alle Richtungen. Da zu diesem Zeitpunkt noch kein weiterer Teilnehmer eine Kenntnis von den Daten hat, geschieht dies noch ohne Gleichwelle. Jeder Zeitrahmen beginnt mit einer Rahmensynchronisation, durch die alle Gleichwellensender, insbesondere Mobilstationen, zeitlich synchronisiert werden, welche den jeweiligen Gleichwellensender/Mobilstation direkt empfangen können. Weiterhin wird das Sendesignal um eine Blockidentifikation ergänzt und das so gebildete Funksigrial vom Gleichwellensender wird abgestrahlt. Da es für den empfangenden Gleichwellensender/Mobilstation nicht wichtig ist, sich auf einen bestimmten Gleichwellensender/Mobilstation zu synchronisieren, können die Gleichwellensender/Mobilstationen diese Rahmensynchronisation gleichzeitig senden.

Empfangsseitig ist in allen Gleichwellensendern/Teilnehmern eine mit einer Blockerkennungseinrichtung BE verbundene Steuereinrichtung CU vorgesehen, welche die Synchronisation S der Blöcke und das erneute, im synchronen Gleichwellenbetrieb erfolgende Aussenden des empfangenen Funksignals steuert. Ein Teil der Gleichwellensender/Mobilstationen empfängt somit die teilweise mit einem zeitlichen Versatz überlagerten Rahmensynchronisationen. Durch die Anwendung des Multiträgerverfahrens ist im Empfänger dieser zeitliche Versatz nicht störend. Nach der Rahmensynchronisation senden alle von diesen Gleichwellensendern/Mobilstationen die Daten (Steuerungsdaten und Nutzdaten), welche sie zuvor empfangen haben. Auch hier empfangen einige neue Gleichwellensender/Mobilstationen die mit einem zeitlichen Versatz überlagerten Daten. Bei der Verwendung eines OFDM-Verfahren (Orthogonal Frequency Division Multiplex) zur Datenübertragung kann die Überlagerung der Daten ohne Verluste genutzt werden. Diese Art der Datenübertragung wird Gleichwelle, oder auch SFN (Single Frequency Network) genannt, wobei diese Methode dann mehrfach wiederholt werden kann.

Die Vorteile beim erfindungsgemäßen Verfahren zur Gleichwellenübertragung bzw. Gleichwellenübertragungssystem, bei dem die Gleichwelle in (fast) allen Zeitschlitzen verwendet wird, sind einerseits die Zeitersparnis, dadurch dass die Nachricht wie in einem Schneeballsystem in verschiedene Richtungen ausgebreitet wird und viele Sender im selben Zeitschlitz senden und somit gemeinsam die Kanalressource für nur eine Nachricht nutzen, und andererseits der Störabstandsgewinn durch die Überlagerung der verschiedenen Sendesignale. Durch die Veränderung des Guard-Intervalls kann eine flexible Anpassung an die zulässige Zeitdifferenz im quasi vermaschten Netz erfolgen, so dass ein guter Kompromiß bezüglich ISI und ACI erzielt werden kann. Der Einfluß entfernungsabhängiger Störungen, wie beispielsweise Jitter, fällt beim erfindungsgemäßen Gleichwellenübertragungssystem infolge des mehrfachen Empfangs identischer Informationen kaum ins Gewicht. Die Gleichwellensender/Teilnehmer/Repeater ergeben sich automatisch (nach Auswertung der Blockidentifikation und nach Maßgabe dieser) und werden nicht adressiert (d.h.die Blockidentifikation entspricht einem adressenlosen Befehl, der abgespeichert und gleichzeitig weitergereicht wird, wodurch der Gleichwellensender/Teilnehmer/Repeater auf den Befehl teilnehmerspezifisch reagiert, die Performance erhöht wird und die Informationsübertragung effizient gestaltet wird).

Im Vergleich zum Kommunikationssystem der DE 199 14 324 C1 der Anmelderin mit einem zentralen Master, nur einer Repeaterebene und Anwendung des SFN-Prinzips nur für Steuerdaten und Synchronisation, d.h. nur in einigen Zeitschlitzen, wird beim erfindungsgemäßen Gleichwellenübertragungssystem das SFN-Prinzip für alle Daten genutzt (das Senden eines neuen Pakets beginnt immer nach dem Broadcast-Prinzip, die darauf folgenden Wiederholungen erfolgen nach dem SFN-Prinzip, siehe FIG. 1) und es können mehrere "Repeaterebenen" vorhanden sein.

Beim erfindungsgemäßen Gleichwellenübertragungssystem können sich zwei/mehrere aufeinander "zurollende" Nachrichtenwellen, ausgelöst von unterschiedlichen Gleichwellensendern/Mobilstationen, die "gleichzeitig" senden wollen, gegenseitig zerstören. Beim dezentralen Funkverbindungsverfahren nach der DE 196 08 846 A1 tritt dies nicht auf, da eine lawinenartige Vermittelung zwischen Quellenteilnehmern, Zielübertragern und Zielteilnehmern ausschließlich beim initialen Aufbau des Funknetzes durchgeführt wird; während des Netzbetriebs erfolgt ein direkt adressierter oder klassifiziert adressierter Funkruf. Um aufeinander "zurollende" Nachrichtenwellen zu vermeiden, kann jedoch ein Ressourcenmanagement vorgesehen werden. Beispielsweise kann im Gleichwellenübertragungssystem, wie beim Kommunikationssystem der DE 199 14 324 C1, ein Master vorgesehen werden, wobei zur Signalisierung eines Sendewunsches an den Master, der daraufhin dann Senderechte erteilt, ein Zeitschlitz im Zeitrahmen vorgesehen werden kann. In diesem Zeitschlitz konkurrieren die Teilnehmer um die Zugriffsberechtigung nach einem Zufallsverfahren, wie zum Beispiel Slotted Aloha. Nach der Übertragung des Sendewunsches erfolgt die Kommunikation zwischen Master und Gleichwellensender/Mobilstation über die reservierten Zeitschlitze.

Prinzip herkömmlicher Repeater in Funksystemen mit Basisstationen und Mobilstationen ist die bidirektionale Verstärkung der Funksignale in- Uplink- und Downlink-Richtung, wobei die Funksignale auf derselben Frequenz wieder ausgesendet werden, auf der sie empfangen wurden. Das Downlink-Signal, also das von der Basisstation des Funknetzes kommende Signal, wird mit einer Anbindungsantenne empfangen, im Repeater verstärkt, möglicherweise gefiltert und über eine Versorgungsantenne zur Mobilstation ausgesendet. Gleichzeitig wird das von der Mobilstation kommende Uplink-Signal mit der Versorgungsantenne empfangen, im Repeater verstärkt, möglicherweise gefiltert und über die Anbindungsantenne zur Basisstation ausgesendet. Dies kann sowohl kanalselektiv in verschiedenen Verstärkern als auch bandselektiv für jeden Repeaterzweig erfolgen. Die Kopplung der beiden Repeaterzweige an die Antennen erfolgt mit meist sehr teuren Duplex-Filtern. Um die Übertragungsqualität der Signale wesentlich zu verbessern, ist aus der DE 196 49 853 ein Repeater für Funksignale bekannt, der die empfangenen Funksignale (eines digitalen zellularen Mobilfunknetzes) demoduliert, die digitalen Daten über eine geeignete Datenverbindung, z. B. LAN, über eine gewisse Distanz überträgt und anschließend neu moduliert, verstärkt und wieder als Funksignale aussendet. Hierzu enthält jeder Repeater folgende Funktionseinheiten:
Empfänger, Kanalfilter, Verstärker und Demodulator für den Uplink-Zweig;
Modulator und Sendeverstärker für den Downlink-Zweig; sowie mindestens ein Dateninterface.

Das Dateninterface selbst beinhaltet im wesentlichen folgende Funktionseinheiten:
Multiplexer, Demultiplexer, Datenfluss-Steuerung und Schnittstellenadapter.

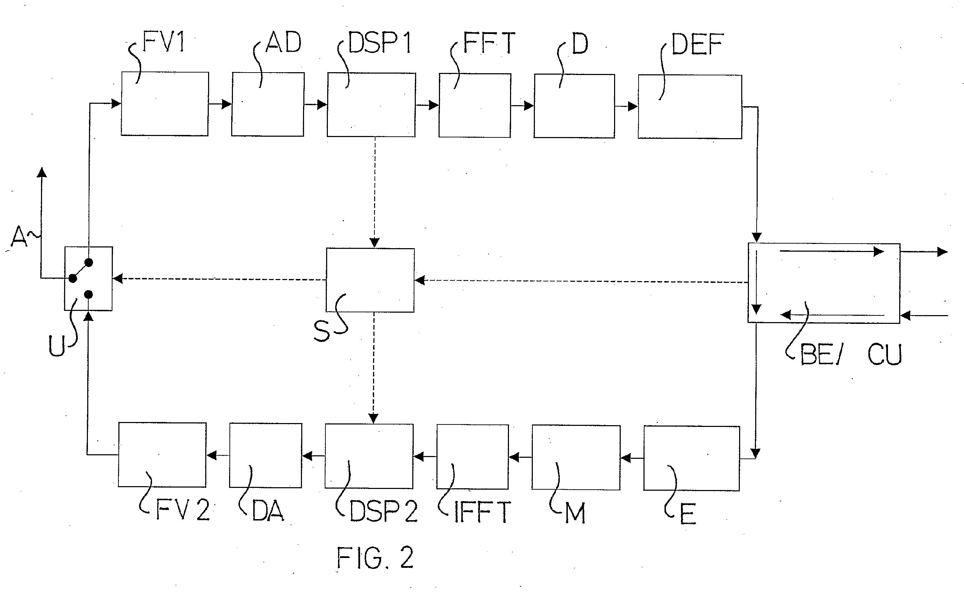

Eine Ausführungsform des erfindungsgemäßen Repeaters/Gleichwellensenders ist in FIG. 2 dargestellt. Der Empfangszweig weist in Serie liegend einen Filter/Verstärker FV1, einen Analog-Digital-Wandler AD, eine digitale Signalaufbereitung DSA1, einen FFT-Transformator FFT, einen Demodulator D und einen Decoder/Fehlererkennung DEF auf. Im Sendezweig liegen in Reihe ein Encoder E, ein Modulator M, ein inverser FFT-Transformator IFFT, eine digitale Signalaufbereitung DSA2 (digitaler Mischer, digitales Filter, Bandbegrenzer, Unterabtaster), ein Digital-Analog-Wandler DA und ein Filter/Verstärker FV2. Die Steuereinrichtung CU, welche auch die Funktionen Blockerkennung und Vermittlung (nach Maßgabe der Blockidentifikation bzw. adressenloser Befehle) übernehmen kann, ist sowohl mit dem Encoder E des Sendezweigs als auch mit dem Decoder/Fehlererkennung DEF des Empfangszweigs verbunden und steht zur Synchronisierung (über S) mit der jeweiligen digitalen Signalaufbereitung DSA1 und DSA2 in Verbindung. Die Kopplung der beiden Repeaterzweige an die Ankopplungseinheit/Antenne A erfolgt vorzugsweise ohne Duplex-Filter, nämlich mittels Umschalter U.

Das erfindungsgemäße Verfahren zur Gleichwellenübertragung bzw. das Gleichwellenübertragungssystem ist insbesondere geeignet für Wireless ad-hoc-Netzwerke mit mobilen Teilnehmern, wo sich hochdynamische Veränderungen in den Übertragungswegen ergeben. Durch die erfindungsgemäße transparente Übertragung ist diese auch für einen höherbitratigen Datendienst ohne Verwendung von Modems (Datenformatumwandlung) geeignet, da die Anwendungs- und Protokollschichten des Datendienstes durchgereicht und so quasi in die Protokollschichten des Mobilfunkdatendienstes eingebunden werden.

In Weiterbildung der Erfindung kann das erfindungsgemäße Gleichwellenübertragungssystem als Funk-LAN (Local Area Network) für eine hochbitratige und paketorientierte Datenverbindung, beispielsweise zu einem Personalcomputer, eingesetzt werden u.a.

## Patentansprüche

1. Verfahren zur Gleichwellenübertragung in einem Gleichwellenübertragungssystem mit mehreren, im Versorgungsgebiet räumlich verteilt angeordneten Sendern, welche eine Steuereinrichtung (CU) aufweisen,
• bei dem von einem das Aussenden von Daten initiierenden Sender die auszusendenden Sendedaten in einem Zeitrahmen, beginnend mit einer Rahmensynchronisation eingefügt, um eine Blockidentifikation ergänzt und das so gebildete Sendesignal vom initiierenden Sender als Broadcast oder Rundmitteilung in alle Richtungen über eine Ankopplungseinheit oder Antenne (A) gesendet wird,
• bei dem in allen zeitlich nachfolgenden, das Sendesignal empfangenden Sendern empfangsseitig die mit einer Blockerkennungseinrichtung (BE) verbundene Steuereinrichtung (CU) die Blockidentifikation zumindest danach auswertet, ob ein Block bereits empfangen wurde oder nicht, und
• bei dem die Steuereinrichtung (CU), welche mit einer im Sendezweig angeordneten digitalen Signalaufbereitung (DSP1) und einer im Empfangszweig angeordneten Signalaufbereitung (DSP2) in Verbindung steht, eine Synchronisation der Sendesignale steuert, wobei die Zeitachse auf dem Übertragungsweg in mehrere unabhängige, logische Kanäle eingeteilt ist, wobei unterschiedliche Zeitschlitze verschiedenen logischen Kanälen zugeordnet sind und wobei das erneute Senden im nächstfolgenden zeitlich nachfolgenden Zeitschlitz des logischen Kanals erfolgt, in welchem das Sendesignal empfangen wurde, so dass ein quasisynchroner Gleichwellenbetrieb realisiert wird und jeder Sender der einen Block bereits empfangen hat, den Block nicht aussendet.

2. Verfahren nach Anspruch 1, **dadurch gekennzeichnet, dass** die Signalübertragung zu den zeitlich nachfolgenden Sendern im Zeitmultiplex erfolgt.

3. Verfahren nach Anspruch 1 oder 2, **dadurch gekennzeichnet, dass** die von den zeitlich nachfolgenden Sendern als Wiederholung gesendeten Daten sich von den zugehörigen empfangenen Daten unterscheiden.

4. Verfahren nach Anspruch 1, **dadurch gekennzeichnet, dass** vom initiierenden Sender sowie von allen zeitlich nachfolgenden Sendern in den Sendedaten ein Zähler integriert ist, der vom zeitlich jeweils nachfolgenden Sender vor dessen erneuten Sendung der Daten modifiziert wird und der es erlaubt, die Anzahl der bereits gesendeten Blockwiederholungen und/oder die Anzahl der maximal noch zu sendenden Blockwiederholungen am Empfänger zu ermitteln.

5. Gleichwellenübertragungssystem mit:
• mehreren, im Versorgungsgebiet räumlich verteilt angeordneten Sendern, wobei ein initiierender Sender in der Weise ausgestaltet ist, dass er auszusendende Sendedaten in einem Zeitrahmen, beginnend mit einer Rahmensynchronisation eingefügt, um eine Blockidentifikation ergänzt und das so gebildete Sendesignal als Broadcast-oder Rundmitteilung in alle Richtungen über eine Ankopplungseinheit oder Antenne (A) sendet,
• einer in allen Sendern empfangsseitig angeordneten und mit einer Blockerkennungseinrichtung (BE) verbundenen Steuereinrichtung (CU),
• einem mit der Steuereinrichtung (CU) verbundenen Empfangszweig mit Filter/Verstärker (FV1), Analog-Digital-Wandler (AD), digitaler Signalaufbereitung (DSP1), FFT-Transformator (FFT), Demodulator (D) und Decoder/Fehlererkennung (DEF),
• einem mit der Steuereinrichtung (CU) verbundenen Sendezweig mit Encoder (E), Modulator (M), inversen FFT-Transformator (IFFT), digitaler Signalaufbereitung (DSP2), Digital-Analog-Wandler (DA) und Filter/Verstärker (FV2),
• der Antenne oder Ankopplungseinheit (A) des jeweiligen Senders und
• einem mit der Antenne oder Ankopplungseinheit (A) und mit dem Empfangszweig und dem Sendezweig verbundenen Umschalter (U),
• wobei die Steuereinrichtung (CU) in der Weise ausgestaltet ist, zu erkennen, ob ein Block bereits empfangen wurde oder nicht, und in der Weise ausgestaltet ist, die Synchronisation (S) der Sendesignale zu steuern, wobei die Zeitachse auf dem Übertragungsweg in mehrere unabhängige, logische Kanäle eingeteilt ist, wobei unterschiedliche Zeitschlitze verschiedenen logischen Kanälen zugeordnet sind und wobei die Steuereinrichtung in der Weise ausgestaltet ist, das erneute Senden im nächstfolgenden zeitlich nachfolgenden Zeitschlitz des logischen Kanals zu steuern, in welchem das Sendesignal empfangen wurde, so dass ein quasisynchroner Gleichwellenbetrieb realisiert wird und jeder Sender, in der Weise ausgestaltet ist, dass wenn er einen Block bereits empfangen hat, den Block nicht aussendet.

6. Gleichwellenübertragungssystem nach Anspruch 5, **dadurch gekennzeichnet, dass** die Sender oder ein Teil der Sender Mobilstationen sind.

7. Gleichwellenübertragungssystem nach Anspruch 5, **dadurch gekennzeichnet, dass** jeder Sender im Gleichwellenübertragungssystem entweder initiierender Sender oder als zeitlich nachfolgender Gleichwellensender ein Repeater ist.

## Claims

1. A method for direct-wave transmission in a direct-wave transmission system, comprising a plurality of transmitters which are arranged in a spatially distributed manner in the supply region and which have a control device (CU),
• whereby the transmission data to be transmitted is inserted in a time frame, beginning with a frame synchronization, in order to supplement a block identification and the transmitted signal thus formed is transmitted from the initiating transmitter as a broadcast or a message in all directions via a coupling unit or antenna (A),
• whereby in all temporally subsequent transmitters receiving the transmission signal, the control device (CU) connected to a block detection device (BE) on the reception side evaluates the block identification at least after whether a block has already been received or not, and
• whereby the control device (CU), which is connected to a digital signal processor (DSP1) and a signal processor (DSP2) arranged in the reception branch, controls synchronization of the transmission signals, wherein the time axis on the transmission path is divided into a plurality of independent, logical channels, wherein different time slots are assigned to different logical channels, and wherein the renewed transmission takes place in the next subsequent time slot of the logical channel in which the transmission signal has been received, so that a quasi-synchronous direct-wave operation is implemented and each transmitter doesn't transmit a block that has already been received.

2. The method according to claim 1, **characterized in that** the signal transmission to the temporally subsequent transmitters takes place in time division multiplex.

3. The method according to claim 1 or 2, **characterized in that** the data transmitted as a repetition by the temporally successive transmitters differ from the associated received data.

4. The method according to claim 1, **characterized in that** a counter is integrated in the transmission data by the initiating transmitter and by all temporally subsequent transmitters, which counter is modified by the respective subsequent transmitter before its renewed transmission of the data and which makes it possible to determine the number of block repetitions already transmitted and/or the number of block repetitions still to be transmitted at the receiver.

5. A common-wave transmission system **comprising:**
• a plurality of transmitters arranged in a spatially distributed manner in the supply region, wherein an initiating transmitter is designed in such a way that transmitting data is inserted in a time frame, beginning with a frame synchronization, in order to supplement a block identification and that the transmitted signal thus formed is transmitted as a broadcast or a message in all directions via a coupling unit or antenna (A),
• a control device (CU), which is arranged in all transmitters on the reception side and is connected to a block detection device (BE),
• a receiving branch connected to the control device (CU) and having a filter/amplifier (FV1), analog-to-digital converter (AD), digital signal conditioning (DSP1), FFT transformer (FFT), demodulator (D) and decoder/error detection (DEF),
• a transmission branch connected to the control device (CU) and having an encoder (E), modulator (M), inverse FFT transformer (IFFT), digital signal conditioning (DSP2), digital-to-analog converter (DA) and filter/amplifier (FV2),
• the antenna or coupling unit (A) of the respective transmitter and
• a changeover switch (U), which is connected to the antenna or coupling unit (A) and to the reception branch and to the transmission branch,
• wherein the control device (CU) is configured to detect whether or not a block has already been received and is configured to synchronize (S) the transmitting signal, wherein the time axis on the transmission path is divided into a plurality of independent, logical channels, wherein different time slots are assigned to different logical channels, and wherein the control device is designed to control the renewed transmission in the next successive time slot of the logical channel in which the transmission signal has been received, so that a quasi-synchronous direct-wave operation is implemented, and each transmitter is designed in such a way that if it has already received a block, does not transmit the block.

6. The common-wave transmission system as claimed in claim 5, **characterized in that** the transmitters or a part of the transmitters are mobile stations.

7. The common-wave transmission system as claimed in claim 5, **characterized in that** each transmitter in the direct-wave transmission system is either an initiating transmitter or as a chronologically following direct-wave transmitter is a repeater.

## Revendications

1. Un procédé de transmission directe d'ondes dans un système de transmission à ondes directes comprend une pluralité d'émetteurs qui sont disposés de manière répartie dans l'espace dans la zone d'alimentation et qui comportent un dispositif de commande (CU),
• dans lequel les données de transmission à transmettre sont insérées dans une trame de temps, commençant par une synchronisation de trame, afin de compléter une identification de bloc et le signal transmis ainsi formé est transmis depuis l'émetteur d'initiation sous la forme d'une diffusion ou d'un message dans toutes les directions par l'intermédiaire d'une unité de couplage ou d'une antenne (A),
• dans lequel dans tous les émetteurs temporellement ultérieurs recevant le signal de transmission, le dispositif de commande (CU) connecté à un dispositif de détection de bloc (BE) côté réception évalue l'identification de bloc au moins après qu'un bloc a déjà été reçu ou non, et
• dans lequel le dispositif de commande (CU), qui est connecté à un processeur de signal numérique (DSP1) et un processeur de signal (DSP2) agencé dans la branche de réception, commande la synchronisation des signaux de transmission, dans lequel l'axe temporel sur le trajet de transmission étant divisé en une pluralité de canaux logiques indépendants, dans lequel différents intervalles de temps étant attribués à différents canaux logiques, et dans lequel la transmission renouvelée ayant lieu dans la prochaine tranche de temps suivante du canal logique dans lequel le signal de transmission a été reçu, de telle sorte qu'une opération d'onde directe quasi-synchrone est mise en œuvre et chaque émetteur ne transmet pas un bloc qui a déjà été reçu.

2. Le procédé selon la revendication 1, **caractérisé en ce que** la transmission de signaux vers les émetteurs temporellement ultérieurs a lieu dans le multiplexage par répartition dans le temps.

3. Le procédé selon les revendications 1 ou 2, **caractérisé en ce que** les données transmises en répétition par les émetteurs temporellement successifs diffèrent des données reçues associées.

4. Le procédé selon la revendication 1, **caractérisé en ce qu'**un compteur est intégré dans les données de transmission par l'émetteur initiateur et par tous les émetteurs temporellement consécutifs, lequel compteur est modifié par l'émetteur suivant respectif avant sa transmission renouvelée des données et qui permet de déterminer le nombre de répétitions de blocs déjà transmises et/ou le nombre maximal de répétitions de blocs restant à envoyer au récepteur.

5. Un système de transmission à ondes communes comprenant:
• une pluralité d'émetteurs disposés de manière spatialement répartie dans la zone d'alimentation, dans lequel un émetteur initiateur étant conçu de telle sorte que des données de transmission sont insérées dans une trame de temps, commençant par une synchronisation de trame, afin de compléter une identification de bloc et que le signal transmis ainsi formé est transmis sous la forme d'une diffusion ou d'un message dans toutes les directions par l'intermédiaire d'une unité de couplage ou d'une antenne (A),
• un dispositif de commande (CU), qui est disposé dans tous les émetteurs côté réception et est relié à un dispositif de détection de bloc (BE),
• une branche de réception connectée au dispositif de commande (CU) et ayant un filtre/amplificateur (FV1), un convertisseur analogique-numérique (AD), un conditionnement de signal numérique (DSP1), un transformateur FFT (FFT), un démodulateur (D) et un décodeur/détection d'erreur (DEF),
• une branche de transmission connectée au dispositif de commande (CU) et ayant un encodeur (E), un modulateur (M), un transformateur FFT inverse (IFFT), un conditionnement de signal numérique (DSP2), un convertisseur numérique-analogique (DA) et un filtre/amplificateur (FV2),
• l'antenne ou l'unité de couplage (A) de l'émetteur respectif et
• un commutateur (U), qui est relié à l'antenne ou à l'unité de couplage (A) et à la branche de réception et à la branche de transmission,
• le dispositif de commande (CU) est configuré pour détecter si un bloc a déjà été reçu ou non et est configuré pour se synchroniser (S) le signal d'émission, dans lequel l'axe temporel sur le trajet de transmission étant divisé en une pluralité de canaux logiques indépendants, dans lequel différents intervalles de temps étant attribués à différents canaux logiques, et dans lequel le dispositif de commande étant conçu pour commander la transmission renouvelée dans la tranche de temps successive suivante du canal logique, dans lequel le signal de transmission a été reçu, de telle sorte qu'une opération d'onde directe quasi-synchrone est mise en œuvre, et chaque émetteur est conçu de telle sorte que s'il a déjà reçu un bloc, ne transmet pas le bloc.

6. Le système de transmission à ondes communes selon la revendication 5, **caractérisé en ce que** les émetteurs ou une partie des émetteurs sont des stations mobiles.

7. Le système de transmission à ondes communes selon la revendication 5, **caractérisé en ce que** chaque émetteur dans le système de transmission à ondes directes est un émetteur initiateur ou soit comme un émetteur à ondes directes suivant chronologiquement est un répéteur.
